# EUROPEAN PATENT SPECIFICATION

(11) **EP 3 109 070 B1**
(45) Date of publication and mention of the grant of the patent: **24.04.2019**
(21) Application number: 14882471.7
(22) Date of filing: 17.02.2014
(51) Int. Cl.: B60F 3/00, B60K 1/00, B60K 1/04, B60K 7/00

(54) **ELECTRIC VEHICLE**
ELEKTROFAHRZEUG
VÉHICULE ÉLECTRIQUE

(43) Date of publication of application: 28.12.2016
(73) Proprietor: Fomm Corporation, Kawasaki-shi, Kanagawa 212-0032 (JP)
(72) Inventor: TURUMAKI, Hideo, Kawasaki-shi, Kanagawa 212-0032 (JP); MORITA, Takayuki, Kawasaki-shi Kanagawa 212-0032 (JP); TAIDO, Akikazu, Nagoya-shi Aichi 467-8525 (JP); MASUMOTO, Daigo, Kaga-shi Ishikawa 922-8686 (JP); SAWADE, Yoshiaki, Kaga-shi Ishikawa 922-8686 (JP)
(74) Representative: TBK
(86) International application number: PCT/JP2014/053589
(87) International publication number: WO 2015/122002

(56) References cited:
- EP-A1- 0 492 655
- CN-U- 201 494 267
- DE-T2- 69 315 711
- JP-A- H09 501 125
- JP-A- 2009 067 122
- KR-A- 20100 020 230
- US-A- 1 425 243
- US-A- 5 181 478

## Description

### TECHNICAL FIELD

The present invention relates to an electric vehicle.

### BACKGROUND ART

Conventionally, various vehicles have been proposed. For example, vehicles capable of running on land and navigating on water surface have been proposed. As techniques related to such vehicles, a technique in which, for example, a vehicle body is molded using resin molding has been proposed.

### CITATION LIST

### Patent Literature

Prior art which is related to this technical field can be found in document KR 2010 0020230 A disclosing an electromobile comprising:
a front wheel, an electric motor that is configured to drive the front wheel, a battery that is configured to supply electrical power to the electric motor, a rear wheel, a vehicle-cabin forming portion that includes a floor having a floor surface of a vehicle cabin and a peripheral wall that is connected to a peripheral portion of the floor so as to extend upwards from the floor and to surround the floor along the peripheral portion of the floor, a frame that is configured to support the front wheel, the rear wheel, and the vehicle-cabin forming portion.

The front wheel, the electric motor, the rear wheel, and the battery of the electromobile when projected in a direction parallel to a left-right direction of the electric vehicle: the electric motor is arranged at a position at which at least a part of the electric motor overlaps with the front wheel and the battery is arranged at a position at which at least a part of the battery overlaps with the rear wheel.

PTL 1: Chinese Pre-grant Utility Model Publication Number 2933931

### SUMMARY OF INVENTION

### Technical Problem

However, in the actual circumstances, there has not been enough thought for the stability of the electric vehicle that floats on the water surface.

A main advantage of the present invention is to improve the stability of the electric vehicles that floats on the water surface.

The present invention has been conceived to solve at least part of the problems mentioned above, and it can be realized as the following aspects.

Aspect 1.
   An electric vehicle including:
   a front wheel;
   an electric motor that is configured to drive the front wheel;
   a battery that is configured to supply electrical power to the electric motor;
   a rear wheel;
   a vehicle-cabin forming portion that includes a floor having a floor surface of a vehicle cabin and a peripheral wall that is connected to a peripheral portion of the floor so as to extend upwards from the floor and to surround the floor along the peripheral portion of the floor; and
   a metallic frame that is configured to support the front wheel, the rear wheel, and the vehicle-cabin forming portion; wherein
   the peripheral wall forms a subject aperture that is at least a lower-side portion of an aperture used for accesses of a passenger,
   the electric vehicle further includes a door member that is capable of closing/opening the subject aperture, and
   when the front wheel, the electric motor, the rear wheel, and the battery are projected in a direction parallel to a left-right direction of the electric vehicle:
      the electric motor is arranged at a position at which at least a part of the electric motor overlaps with the front wheel;
      the battery is arranged at a position at which at least a part of the battery overlaps with the rear wheel; and
      a center of gravity of the electric vehicle is placed below a waterline in both a light load state and a full load state, and at the same time, a position of the center of gravity in a forward-to-backward direction of the electric vehicle is placed between the front wheel and the rear wheel.
         According to this aspect, the electric vehicle can float on the water surface by the buoyancy obtained by the vehicle-cabin forming portion and the door member that closes the subject aperture formed by the vehicle-cabin forming portion. Furthermore, by arranging the electric motor, which is a relatively heavy component among the components of the electric vehicle, in the vicinity of the front wheel and by arranging the battery, which is another relatively heavy component, in the vicinity of the rear wheel, it is possible to place the center of gravity of the electric vehicle below the waterline in both of the light load state and the full load state, and at the same time, it is possible to place the position of the center of gravity in the forward-to-backward direction of the electric vehicle between the front wheel and the rear wheel. As a result, it is possible to improve the stability of the electric vehicle floating on the water surface and to prevent turnover of the electric vehicle when floating on the water surface.
Aspect 2.
   The electric vehicle according to aspect 1, wherein
   the vehicle-cabin forming portion and the door member are formed of resin.
   According to this aspect, because the vehicle-cabin forming portion and the door member can be made lighter with ease, the electric vehicle can easily float on the water surface. As a result, it is possible to further improve the stability of the electric vehicle floating on the water surface.
Aspect 3.
   The electric vehicle according to aspect 1 or 2, wherein
   the front wheel includes: a tire; a road wheel on which the tire is mounted; and a flow-channel forming portion that forms an opening facing a backward direction side and that forms a flow channel from a first side of the road wheel to the opening,
   the road wheel includes a propeller blade, and
   when the road wheel is rotated in water, the flow-channel forming portion discharges water from the opening towards the backward direction side, the water being sucked from a second side of the road wheel and discharged to the first side by the road wheel.
   According to this aspect, when the electric vehicle floats on the water surface, the electric vehicle can move in a stable state by driving the front wheel.
Aspect 4.
   The electric vehicle according to any one of aspects 1 to 3, further including
   a headlight, wherein
   at least a part of the headlight is arranged at a position higher than the waterline that is associated with the full load state.
   According to this aspect, when the electric vehicle floats on the water surface, the headlight can illuminate the forward direction of the electric vehicle.

### BRIEF DESCRIPTION OF DRAWINGS

FIG. 1 is a perspective view of an electric vehicle 100 provided as an example of the present invention.
FIG. 2 is a perspective view of a first partial structure 101 of the electric vehicle 100.
FIG. 3 is a perspective view of a second partial structure 102 of the electric vehicle 100.
FIG. 4 is a perspective view of a vehicle-cabin forming portion 30 and left and right doors 80L and 80R.
FIG. 5 is a projection view showing a projection of some components of the electric vehicle 100 in the direction parallel to the left-right direction DLR.
FIG. 6 is a sectional view including the center axis CL of a left front wheel 21L.

### DESCRIPTION OF EMBODIMENT

### A. Example:

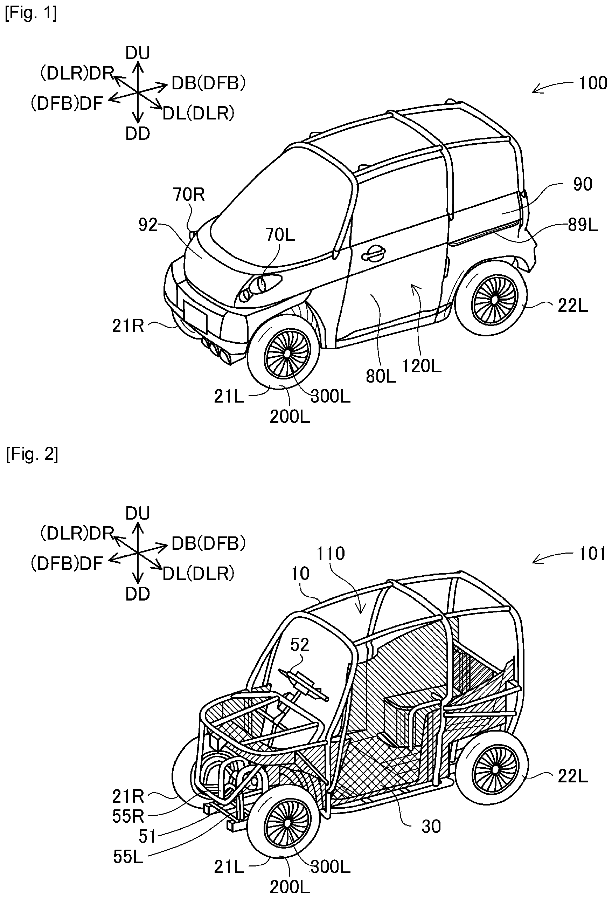

Next, an embodiment of the present invention will be described with reference to an example. FIG. 1 is a perspective view of an electric vehicle 100 provided as an example of the present invention. In this figure, six directions DF, DB, DR, DL, DD, and DU are illustrated. The forward direction DF is the forward movement direction of the electric vehicle 100, and the backward direction DB is the direction opposite to the forward direction DF. Hereinafter, the direction parallel to the forward direction DF is also referred to as "forward-to-backward direction DFB". The upward direction DU is the vertical upward direction, and the downward direction DD is the vertical downward direction. The right direction DR is the right direction when facing the forward direction DF, and the right direction DR is perpendicular to the forward direction DF and the upward direction DU. The left direction DL is the direction opposite to the right direction DR. Hereinafter, the direction parallel to the right direction DR is also referred to as "left-right direction DLR". In addition, for a pair of components that are arranged on the left and right sides, a reference sign of the component arranged on the left side is followed by a character "L", and a reference sign of the component arranged on the right side is followed by a character "R".

In this figure, a shape of the external appearance of the electric vehicle 100 is schematically shown. In addition, in this figure, as the components of the electric vehicle 100, outer plates 90, a door 80L, a slide mechanism 89L that slidably supports the door 80L, front and rear wheels 21L, 21R, and 22L, and headlights 70L and 70R are illustrated. The outer plates 90 include a front cover 92 that is arranged on the forward direction DF side of the electric vehicle 100. A door aperture 120L, which is used for accesses of passengers, is formed in the electric vehicle 100. The door aperture 120L can be opened/closed with the door 80L. In FIG. 1, the door aperture 120L is closed with the door 80L.

Although illustrations thereof are omitted, a left electric motor that drives the left front wheel 21L is arranged on the right direction DR side of the left front wheel 21L. Similarly, a right electric motor that drives the right front wheel 21R is arranged in the left direction DL of the right front wheel 21R. No electric motor is connected to the rear wheels (for example, the left rear wheel 22L). As described above, the electric vehicle 100 is a front-wheel driven car. Furthermore, the electric vehicle 100 includes a frame and a vehicle-cabin forming portion (details of which will be described later) that are not shown in FIG. 1. The slide mechanism 89L is fixed to the frame.

FIG. 2 is a perspective view of a first partial structure 101 of the electric vehicle 100. The first partial structure 101 is the remaining structure after the exterior equipment including the outer plates 90 and the interior equipment (for example, seats) (not shown) have been removed from the electric vehicle 100 shown in FIG. 1. In this figure, as the components of the first partial structure 101, a frame 10, a vehicle-cabin forming portion 30 that forms a vehicle cabin 110, the left and right front wheels 21L and 21R, the left rear wheel 22L, a steering device 51, a steering wheel 52, and left and right front suspension devices 55L and 55R are illustrated. The vehicle-cabin forming portion 30 is shown with a hatched pattern. Although illustrations thereof are omitted, left and right front seats and left and right rear seats are arranged in the vehicle cabin 110.

In order to increase rigidity of the electric vehicle 100, the frame 10 is formed by using metal (for example, iron, aluminum, and so forth). The frame 10 and the left front wheel 21L are connected by the left front suspension device 55L. The frame 10 and the right front wheel 21R are connected by the right front suspension device 55R. In other words, the frame 10 supports the front wheels 21L and 21R via the front suspension devices 55L and 55R. In addition, the steering device 51 is linked to the front wheels 21L and 21R, and the steering wheel 52 is linked to the steering device 51. The steering device 51 can change the orientations of the front wheels 21L and 21R. A user (a driver) can control the steering device 51 by operating the steering wheel 52.

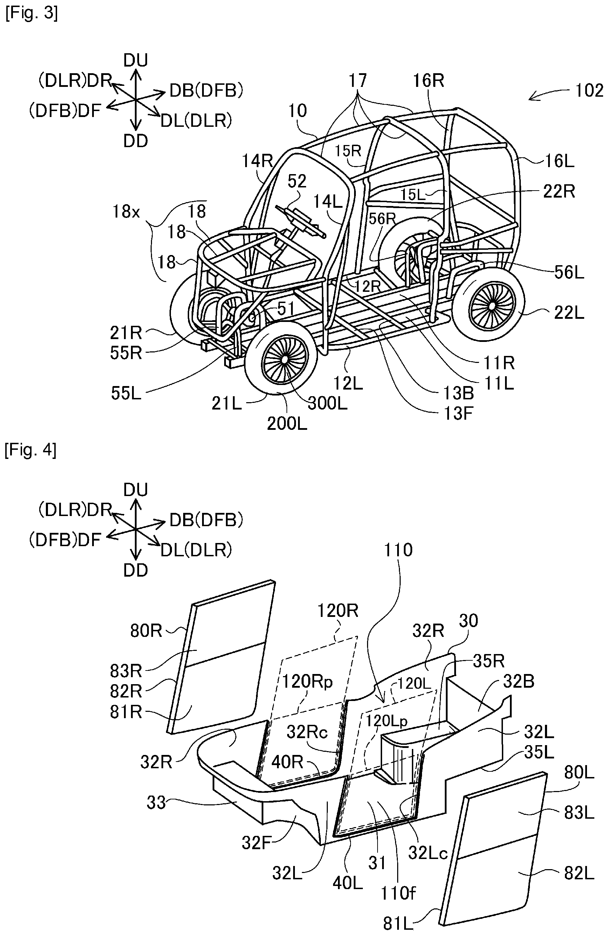

FIG. 3 is a perspective view of a second partial structure 102 of the electric vehicle 100. The second partial structure 102 is the remaining structure after the vehicle-cabin forming portion 30 is removed from the first partial structure 101 shown in FIG. 2. In this figure, as the components of the second partial structure 102, in addition to the components shown in FIG. 2, left and right rear suspension devices 56L and 56R, and a right rear wheel 22R are illustrated. The frame 10 and the left rear wheel 22L are connected by the left rear suspension device 56L. The frame 10 and the right rear wheel 22R are connected by the right rear suspension device 56R. In other words, the frame 10 supports the rear wheels 22L and 22R via the rear suspension devices 56R and 56L.

As shown in FIG. 3, the frame 10 includes, as the components forming a chassis of the electric vehicle 100, left and right center rails 11L and 11R, left and right side members 12L and 12R, and front and rear cross members 13F and 13B. The left and right center rails 11L and 11R are members extending in the forward-to-backward direction DFB. The left and right side members 12L and 12R are members extending in the forward-to-backward direction DFB and are shorter than the center rails 11L and 11R. The left side member 12L is arranged on the left direction DL side of the central portion of the left center rail 11L. The right side member 12R is arranged on the right direction DR side of the central portion of the right center rail 11R. The front and rear cross members 13F and 13B extend in the left-right direction DLR from the left side member 12L to the right side member 12R and connect the center rails 11L and 11R with the side members 12L and 12R. The vehicle-cabin forming portion 30 (see FIG. 2) is fixed to the frame 10 in a state in which the vehicle-cabin forming portion 30 is mounted on the center rails 11L and 11R, the side members 12L and 12R, and the cross members 13F and 13B.

Furthermore, the frame 10 includes, as the components supporting the outer plates 90 of the electric vehicle 100 (see FIG. 1), left and right front pillars 14L and 14R, left and right center pillars 15L and 15R, left and right rear pillars 16L and 16R, a plurality of roof bars 17, and a plurality of front bars 18.

The plurality of front bars 18 form a cage-like front cover frame 18x that is fixed to the forward direction DF side of the center rails 11L and 11R. The front cover frame 18x supports the front cover 92 that covers the steering device 51 and the front suspension devices 55L and 55R (see FIG. 1).

Lower ends of the front pillars 14L and 14R and lower ends of the rear pillars 16L and 16R are connected to the center rails 11L and 11R. Lower ends of the center pillars 15L and 15R are connected to the side members 12L and 12R. The plurality of roof bars 17 respectively connect upper ends of the pillars 14L, 14R, 15L, 15R, 16L, and 16R. These members 14L, 14R, 15L, 15R, 16L, 16R, and 17 support the outer plates 90 (see FIG. 1) that cover the vehicle cabin 110 (see FIG. 2).

In addition to the members mentioned above, the frame 10 includes other various members. In addition, as the methods for connecting the plurality of members of the frame 10, any methods, such as welding, screwing, connection using connectors, and so forth, may be employed.

FIG. 4 is a perspective view of the vehicle-cabin forming portion 30 and the left and right doors 80L and 80R. The apertures 120L and 120R illustrated by dotted lines in the figure respectively show the left and right door apertures 120L and 120R, which are opened/closed by the left and right doors 80L and 80R. The left door aperture 120L is formed between the left front pillar 14L (see FIG. 3) and the left center pillar 15L. The right door aperture 120R is formed between the right front pillar 14R and the right center pillar 15R.

The right door 80R includes an inner panel 81R, an outer panel 82R, and a door glass 83R. The inner panel 81R forms an inner (in other words, the vehicle cabin 110 side) portion of the right door 80R. The outer panel 82R forms an outer portion of the right door 80R. These panels 81R and 82R form a portion of the right door 80R on the downward direction DD side. The door glass 83R is arranged on the upward direction DU side of the panels 81R and 82R.

The left door 80L includes an inner panel 81L, an outer panel 82L, and a door glass 83L. The configurations of these members 81L, 82L, and 83L are the same as those of the members 81R, 82R, and 83R of the right door 80R, respectively.

The vehicle-cabin forming portion 30 includes a floor 31 and a peripheral wall 33. The floor 31 is a plate extending in a substantially horizontal direction and has a floor surface 110f of the vehicle cabin 110. The peripheral wall 33 is constituted of a front wall 32F, a left wall 32L, a rear wall 32B, and a right wall 32R. The front wall 32F, the left wall 32L, the rear wall 32B, and the right wall 32R are connected to each other in this order. The peripheral wall 33 is connected to a peripheral portion of the floor 31 so as to extend from the floor 31 towards the upward direction DU side and to surround the floor 31. In this example, the peripheral wall 33 is connected to the peripheral portion of the floor 31 over the entire circumference thereof. More specifically, the front wall 32F, the left wall 32L, the rear wall 32B, and the right wall 32R are connected to the forward direction DF side portion, the left direction DL side portion, the backward direction DB side portion, and the right direction DR side portion of the floor 31, respectively.

A recessed portion 35R (hereinafter, also referred to as "a wheel housing 35R") that is recessed towards the vehicle cabin 110 side is formed at a right rear portion of the floor 31. The wheel housing 35R is provided so as to avoid interference between the right rear wheel 22R and the vehicle-cabin forming portion 30. A wheel housing 35L for avoiding interference between the left rear wheel 22L and the vehicle-cabin forming portion 30 is also formed at a left rear portion of the floor 31.

A substantially rectangular cutout portion 32Rc extending from an upper end of the right wall 32R in the downward direction DD is formed on the right wall 32R. This cutout portion 32Rc forms a lower-side portion 120Rp of the right door aperture 120R (hereinafter, referred to as "subject aperture 120Rp"). By opening/closing the right door 80R, the inner panel 81R can open/close this subject aperture 120Rp. On edges of the cutout portion 32Rc, a seal member 40R is fixed so as to extend along the edges of the cutout portion 32Rc. When the right door aperture 120R is closed by the right door 80R, the seal member 40R seals a gap between the inner panel 81R and the right wall 32R over the entire edges of the cutout portion 32Rc.

The configuration of the left wall 32L is similar to that described above. A substantially rectangular cutout portion 32Lc extending from an upper end in the downward direction DD is formed on the left wall 32L. The cutout portion 32Lc forms a subject aperture 120Lp that is a lower-side portion of the door aperture 120L. By opening/closing the left door 80L, the inner panel 81L can open/close this subject aperture 120Lp. When the door aperture 120L is closed by the left door 80L, a seal member 40L fixed to edges of the cutout portion 32Lc seals a gap between the inner panel 81L and the left wall 32L over the entire edges of the cutout portion 32Lc.

In the state in which two doors 80L and 80R are closed, the vehicle-cabin forming portion 30 and the inner panels 81L and 81R form a cup-shaped member. Such a cup-shaped member can provide the electric vehicle 100 with buoyancy sufficient to allow the electric vehicle 100 to float on the water surface. The vehicle-cabin forming portion 30 and the inner panels 81L and 81R are formed by using resin (for example, carbon fiber reinforced plastics). By doing so, the weight of the electric vehicle 100 can be reduced. In addition, various through holes (not shown) are formed in the vehicle-cabin forming portion 30 (for example, through holes for passing electric cables connected to electrical equipment). Such through holes are sealed in order to suppress inundation of the vehicle cabin 110 (for example, such holes are filled with sealant).

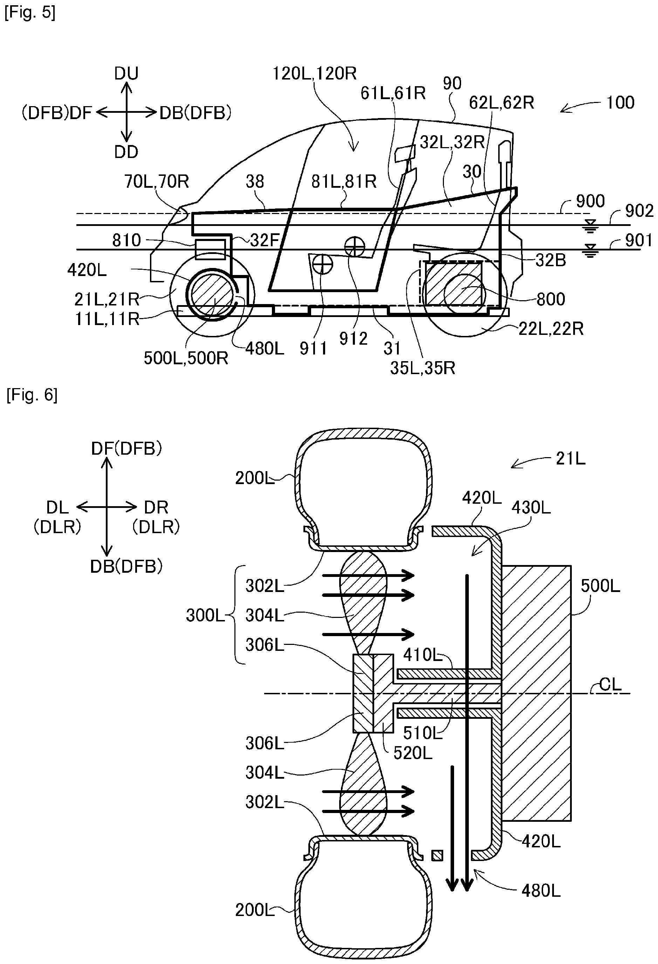

FIG. 5 is a projection view showing a projection of some components of the electric vehicle 100 in the direction parallel to the left-right direction DLR (in other words, a projection of the electric vehicle 100 from the left side to the right side). In this figure, the outer plates 90, the vehicle-cabin forming portion 30, the inner panels 81L and 81R, front seats 61L and 61R, rear seats 62L and 62R, the front wheels 21L and 21R, the rear wheels 22L and 22R, the center rails 11L and 11R, the headlights 70L and 70R, a battery 800, a controller unit 810, and electric motors 500L and 500R are illustrated. A left electric motor 500L is connected to the left front wheel 21L, and a right electric motor 500R is connected to the right front wheel 21R. In this embodiment, as the electric motors 500L and 500R, motors with total rated power output of 15 [kW] or less are used. In addition, the electric motors 500L and 500R constitute in-wheel motors arranged inside the road wheels constituting the front wheels 21L and 21R. The contour of the vehicle-cabin forming portion 30 and the contours of the inner panels 81L and 82R are shown by thick lines. In addition, the electric motors 500L and 500R and the battery 800 are shown with a hatched pattern. The electric vehicle 100 is configured so as to have substantially left-right symmetrical configuration. Therefore, in FIG. 5, various pairs of components that are arranged on the left and right sides are shown in a manner that they are exactly overlapped. For example, in FIG. 5, the contour of the left electric motor 500L is the same as the contour of the right electric motor 500R.

The controller unit 810 is an electronic circuit that drives the electric motors 500L and 500R by using electrical power supplied by the battery 800. The controller unit 810 includes, for example, a computer and an inverter circuit. As the computer, for example, it is possible to employ known computers having a CPU, a volatile memory, and a non-volatile memory. The CPU controls the inverter circuit by executing programs stored in the non-volatile memory. In addition, the CPU controls the inverter circuit in response to signals from operation means (not shown) (for example, accelerator pedal) that is operated by a user. Under the control performed by the computer, the inverter circuit controls the electric motors 500L and 500R by supplying the electrical power from the battery 800 to the electric motors 500L and 500R.

The front seats 61L and 61R are arranged at positions at which they roughly overlap with the door apertures 120L and 120R. The rear seats 62L and 62R are arranged on the backward direction DB side of the front seats 61L and 61R. The rear seats 62L and 62R are arranged on the wheel housings 35L and 35R, respectively.

The battery 800 is arranged between two wheel housings 35L and 35R. As described above, the battery 800 is arranged inside the vehicle-cabin forming portion 30 (in other words, inside the vehicle cabin 110). The controller unit 810 is arranged on the forward direction DF side of the front wall 32F (in other words, outside the vehicle cabin 110).

The battery 800 and the controller unit 810 are connected by electrical cables (not shown). The electrical cables are guided from the battery 800 to the controller unit 810 through the through hole (not shown) provided in the vehicle-cabin forming portion 30. A water-proof sealant is filled into this through hole. In addition, the controller unit 810 and the electric motors 500L and 500R are connected by electrical cables (not shown). All of the electric motors 500L and 500R, the battery 800, the controller unit 810, and the electrical cables are configured to have a water-proof structure.

In this figure, a reference height 900 is illustrated. This reference height 900 shows the position of the lowest portion of the upward-direction DU side end of a cup-shaped member 38 formed by the vehicle-cabin forming portion 30 and the inner panels 81L and 81R. When the electric vehicle 100 floats on the water surface, if the water surface is lower than the reference height 900, then water is less likely to enter the inside of the cup-shaped member 38 (in other words, the vehicle cabin 110), and thereby, the electric vehicle 100 can float for a longer period of time (for example, for a day). For example, at the time of a disaster such as flooding etc., the electric vehicle 100 can float on the water surface.

Furthermore, in this figure, a first waterline 901 and a second waterline 902 are illustrated. The first waterline 901 is the waterline in the case in which the electric vehicle 100 in a light load state floats on the water surface. The second waterline 902 is the waterline in the case in which the electric vehicle 100 in a full load state floats on the water surface. In this case, the light load state means a state in which there is no luggage or passenger in the vehicle. In other words, the first waterline 901 is the waterline that is associated with the weight of the electric vehicle 100 itself (also referred to as light weight). In addition, the full load state means a state in which there are the maximum load of luggage and the maximum number of passengers in the vehicle. The maximum load and the maximum number of passengers are set in advance in accordance with the electric vehicle 100. In addition, for the body weights of the passengers, the standard body weight (for example, 55kg) that has been set in advance in association with the maximum number of passengers is employed. As described above, the gross weight of the electric vehicle 100 in the full load state (in other words, the maximum vehicle weight) is set in advance. The second waterline 902 is the waterline that is associated with the maximum gross weight as described above.

As shown in the figure, the first waterline 901 is positioned below the reference height 900. Although the second waterline 902 is positioned above the first waterline 901, the second waterline 902 is positioned below the reference height 900. Therefore, the electric vehicle 100 can float on the water surface in both of the light load state and the full load state.

As described above, it is possible to employ various methods as a method to make the electric vehicle 100 float on the water surface. For example, it is possible to employ a method in which the vehicle-cabin forming portion 30 and the inner panels 81L and 81R are formed by using lightweight materials. As the lightweight materials, it is possible to employ at least one of metals and resins, for example. As the metals, it is possible to employ relatively lightweight metals (for example, aluminum) among various metals. As the resins, it is possible to employ any one or more resins selected from carbon fiber reinforced plastics, glass fiber reinforced plastics, engineering plastics, dicyclopentadiene, and epoxy resin, for example. By employing such lightweight materials, it is possible to make the electric vehicle 100 float on the water surface with ease. In addition, by employing the resins, it is possible to manufacture the vehicle-cabin forming portion 30 and the inner panels 81L and 81R with ease. For example, it is possible to mold the whole vehicle-cabin forming portion 30 as one part. However, the vehicle-cabin forming portion 30 may be manufactured by connecting a plurality of members. In addition, different materials may be used for the vehicle-cabin forming portion 30 and the inner panels 81L and 81R.

In this figure, the centers of gravity 911 and 912 are shown. A first center of gravity 911 shows the center of gravity of the electric vehicle 100 in the light load state. The first center of gravity 911 is placed below the first waterline 901. In addition, a second center of gravity 912 shows the center of gravity of the electric vehicle 100 in the full load state. Although the position of the second center of gravity 912 is higher than that of the first center of gravity 911, the second center of gravity 912 is placed below the second waterline 902. As described above, when the center of gravity is placed below the waterline, it is possible to reduce the probability of turnover of the electric vehicle 100. As a result, it is possible to improve stability of the electric vehicle floating on the water surface.

In this example, in order to place the center of gravity below the waterline, the electric motors 500L and 500R and the battery 800, which are relatively heavy components among the components of the electric vehicle 100, are arranged at low positions. More specifically, in the projection view shown in FIG. 5, the left electric motor 500L is arranged at a position at which the whole left electric motor 500L overlaps with the front wheels 21L and 21R. Similarly, the right electric motor 500R is also arranged at a position at which the whole right electric motor 500R overlaps with the front wheels 21L and 21R. In addition, in the projection view shown in FIG. 5, the battery 800 is arranged at a position at which a part of the battery 800 overlaps with the rear wheels 22L and 22R.

In addition, as shown in FIG. 5, the positions of the centers of gravity 911 and 912 in the forward-to-backward direction DFB are placed between the front wheels 21L and 21R and the rear wheels 22L and 22R. Therefore, it is possible to suppress forward or backward inclination of the electric vehicle 100 floating on the water surface. In this example, in order to place the centers of gravity between the front wheels 21L and 21R and the rear wheels 22L and 22R, the electric motors 500L and 500R are positioned in the vicinity of the front wheels 21L and 21R, and the battery 800 is positioned in the vicinity of the rear wheels 22L and 22R (see FIG. 5).

In addition, as shown in FIG. 5, the headlights 70L and 70R are arranged at positions higher than the second waterline 902 that is associated with the full load state. Therefore, when the electric vehicle 100 navigates on the water surface, the headlights 70L and 70R can illuminate the forward direction of the electric vehicle 100. In order to allow the headlights 70L and 70R to illuminate the forward direction of the electric vehicle 100 when the electric vehicle 100 is floating on the water surface, it suffices to arrange at least a part of the headlights 70L and 70R at positions higher than the second waterline 902 that is associated with the full load state. For example, a part of the headlights 70L and 70R may be arranged at a position lower than the second waterline 902 that is associated with the full load state. In addition, when the electric vehicle 100 navigates on the water surface, the headlights 70L and 70R may not be used. In this case, the whole headlights 70L and 70R may be arranged at positions lower than the second waterline 902 that is associated with the full load state.

FIG. 6 is a sectional view including the center axis CL of the left front wheel 21L. This sectional view shows a cross-section that is parallel to the forward-to-backward direction DFB and the left-right direction DLR. In this figure, in addition to the left front wheel 21L, the electric motor 500L, a driving shaft 510L that projects out from the electric motor 500L towards the left direction DL side, and a hub 520L that is fixed at a left-direction DL side end of the driving shaft 510L are illustrated.

The left front wheel 21L includes a road wheel 300L connected to the hub 520L, a tire 200L mounted on the road wheel 300L, a support member 410L that supports the driving shaft 510L, and a cover 420L that covers all of the right direction DR side of the road wheel 300L. The cover 420L is connected to the support member 410L. In addition, the electric motor 500L is fixed to the support member 410L. The driving shaft 510L, the hub 520L, the road wheel 300L, and the tire 200L can rotate about the common center axis CL. As described above, the rotation axis of the electric motor 500L coincides with the rotation axis of the road wheel 300L. Although illustration thereof is omitted, the support member 410L is connected to the left front suspension device 55L (see FIG. 2).

The cover 420L forms a ring-shaped space 430L that surrounds the support member 410L on the right direction DR side of the road wheel 300L. In addition, an opening 480L is formed on the backward direction DB side of the cover 420L. In FIG. 5, the contour of the cover 420L and the opening 480L are illustrated. As shown in the figure, the opening 480L faces the backward direction DB side.

The road wheel 300L includes a hub 306L connected to the hub 520L, a rim 302L on which the tire 200L is mounted, and spokes 304L that connect the hub 306L with the rim 302L. The spokes 304L form propeller blades. In the state in which at least a part of the road wheel 300L is immersed in the water, when the road wheel 300L is rotated in the same rotation direction as that during forward movement, water is sucked from the left direction DL side and discharged towards the right direction DR side by the spokes 304L. The water that has been discharged towards the right direction DR side passes through the space 430L and is discharged from the opening 480L towards the backward direction DB side. As a result, the left front wheel 21L generates thrust force in the forward movement direction. As described above, the electric vehicle 100 can move forward even when floating on the water surface. The space 430L formed by the cover 420L corresponds to a flow channel of the water from the right direction DR side of the road wheel 300L to the opening 480L. In other words, the cover 420L corresponds to a flow-channel forming portion forming a flow channel 430L.

In the example in FIG. 5, the whole left front wheel 21L is arranged below the first waterline 901 that is associated with the light load state. Therefore, the left front wheel 21L can generate large thrust force regardless of a load. However, a part of the left front wheel 21L may be arranged above the first waterline 901. In addition, a part of the left front wheel 21L may be arranged above the second waterline 902.

In addition, it is possible to change the orientation of the left front wheel 21L by the steering device 51 (see FIG. 1). When the orientation of the left front wheel 21L is changed, the direction of the water ejected from the opening 480L is also changed. As a result, the electric vehicle 100 can change its travelling direction even when floating on the water surface.

The right front wheel 21R has a mirror image configuration with respect to the configuration of the left front wheel 21L. Therefore, similarly to the left front wheel 21L, the right front wheel 21R can also generate the thrust force in the forward movement direction, and in addition, the travelling direction can be changed. As described above, when the electric vehicle 100 is floating on the water surface, the electric vehicle 100 can move in a stable state by driving the front wheels 21L and 21R.

### C. Modification:

(1) The arrangements of the electric motors 500L and 500R are not limited to those shown in FIG. 5, and it is possible to employ other various arrangements. For example, in the projection view shown in FIG. 5, a part of the left electric motor 500L may be arranged at outside the front wheels 21L and 21R. In general, in the projection view shown in FIG. 5, it is preferable that the left electric motor 500L be arranged at a position at which at least a part of the left electric motor 500L overlaps with at least one of the front wheels 21L and 21R. This also applies to the arrangement of the right electric motor 500R. In all cases, in order to lower the center of gravity, it is preferable that the whole electric motors 500L and 500R be arranged at positions lower than that of an upward-direction DU side end of at least one of the front wheels 21L and 21R.
(2) The arrangement of the battery 800 is not limited to that shown in FIG. 5, and it is possible to employ other various arrangements. For example, in the projection view shown in FIG. 5, the battery 800 may be configured such that the whole battery 800 overlaps with at least one of the rear wheels 22L and 22R. In general, in the projection view shown in FIG. 5, it is preferable that the battery 800 be arranged at a position at which at least a part of the battery 800 overlaps with at least one of the rear wheels 22L and 22R. In all cases, in order to lower the center of gravity, it is preferable that the whole battery 800 be arranged at a position lower than that of an upward-direction DU side end of at least one of the rear wheels 22L and 22R. In addition, in the case in which a plurality of batteries are arranged, at least a part of each of the all batteries may be arranged at positions at which they overlap with the rear wheels. Furthermore, for a specific number of batteries, at least a part of the each batteries may be arranged at positions at which they overlap with the rear wheels, and the remaining batteries may be arranged at other locations such that the center of gravity of the electric vehicle is placed below the waterline in both of the light load state and the full load state, and at the same time, such that the position of the center of gravity is placed between the front wheels and the rear wheels in the forward-to-backward direction of the electric vehicle.
(3) The configuration of the left front wheel 21L is not limited to that shown in FIG. 6, and it is possible to employ other various configurations. For example, the road wheel 300L is not limited to the member having the shape described in FIG. 6, and it is possible to employ other various members including a propeller blade. As the configuration of the propeller blade, it is possible to employ various configurations in which rotary motion is converted into thrust force by moving water. For example, it may be possible to employ a member including a helical blade having the center axis CL as the center. In addition, it may be possible to employ a member obtained by providing a plurality of through holes in a disk plate connecting the hub 306L and the rim 302L, and furthermore, by fixing blades, which extend from edges of the through holes, to the disk plate. In addition, the cover 420L may be arranged on the left direction DL side of the road wheel 300L. In this case, the road wheel 300L is configured such that the water is sucked from the right direction DR side (in other words, inside) and the water is discharged from the left direction DL (in other words, outside). It may be possible to omit propeller blade and the cover 420L from the configuration of the road wheels. Also in this case, the electric vehicle 100 can float on the water surface. In addition, the electric motor 500L and the road wheel 300L may be linked via gears. In all cases, in order to improve running stability of the electric vehicle 100, as the configuration of the right front wheel 21R, it is preferable to employ the mirror image configuration with respect to the configuration of the left front wheel 21L.
(4) In the example shown in FIG. 4, the seal member 40R may be fixed to the inner panel 81R of the right door 80R instead of the right wall 32R. Similarly, the seal member 40L may also be fixed to the inner panel 81L of the left door 80L.
(5) Through holes may be formed in the vehicle-cabin forming portion 30 and the inner panels 81L and 81R for passing various members such as electrical cables, etc. In this case, in order to suppress entry of water, it is preferable to provide sealing in the through holes positioned below the second waterline 902 that is associated with the full load state. It is possible to employ a sealing that completely seals the through holes as the sealing. Instead of this, it may be possible to employ a sealing that allows some entry of water. For example, it is possible to employ the sealing that provides a sealing performance allowing the electric vehicle 100 in the full load state to remain floating for at least a day.
(6) The configuration of the electric vehicle 100 is not limited to those shown in FIGs. 1 to 5, and it is possible to employ other various configurations. For example, an opening/closing mechanism for the doors 80L and 80R is not limited to the slide mechanism, and it is possible to employ a hinge mechanism or link mechanism. In all cases, it is preferable that the opening/closing mechanism be fixed to the frame 10. In addition, the door aperture and the door may be provided only on either one side of the left direction DL side and the right direction DR side of the electric vehicle 100. In addition, the door aperture and the door may be provided on the backward direction DB side of the electric vehicle 100. In all cases, in the vehicle-cabin forming portion 30, it is preferable that at least a portion of the door aperture positioned at and below the second waterline 902 that is associated with the full load state be formed as the subject aperture, and that the door includes a door member (for example, the inner panel 81R in FIG. 4) that opens/closes the subject aperture. In addition, it is possible to employ any materials for the materials of the components other than the frame 10, the vehicle-cabin forming portion 30, and the inner panels 81L and 81R among the components of the electric vehicle 100. For example, it may be possible to employ resins as the material of the outer plates 90.

Although the present invention has been described above with reference to the example and the modification, the embodiment of the above-mentioned invention is intended to ease understanding of the present invention, and not to limit the present invention. The present invention may be subjected to alteration or improvement without departing from its scope of the claimed subject.

### Industrial Applicability

The present invention can be suitably utilized for an electric vehicle that floats on the water surface.

### Reference Signs List:

10: frame, 11L: left center rail, 11R: right center rail, 12L: left side member, 12R: right side member, 13F, 13B: cross member, 14L: left front pillar, 14R: right front pillar, 15L: left center pillar, 15R: right center pillar, 16L, 16R: rear pillar, 17: roof bar, 18: front bar, 18x: front cover frame, 21L: left front wheel, 21R: right front wheel, 22L: left rear wheel, 22R: right rear wheel, 30: vehicle-cabin forming portion, 31: floor, 32B: rear wall, 32F: front wall, 32L: left wall, 32R: right wall, 33: peripheral wall, 35L: wheel housing, 35R: wheel housing, 38: cup-shaped member, 40L, 40R: seal member, 51: steering device, 52: steering wheel, 55L: left front suspension device, 55R: right front suspension device, 56L: left rear suspension device, 56R: right rear suspension device, 61L, 61R: front seat, 62L, 62R: rear seat, 70L, 70R: headlight, 80L: left door, 80R: right door, 81L, 81R: inner panel, 82L, 82R: outer panel, 83L, 83R: door glass, 89L: slide mechanism, 90: outer plate, 92: front cover, 100: electric vehicle, 101: first partial structure, 102: second partial structure, 110: vehicle cabin, 110f: floor surface, 120L: left door aperture, 120R: right door aperture, 120Lp, 120Rp: subject aperture, 200L: tire, 300L: road wheel, 302L: rim, 304L: spoke, 306L: hub, 410L: support
member, 420L: cover, 430L: flow channel, 480L: opening, 500L: left electric motor, 500R: right electric motor, 510L: driving shaft, 520L: hub, 800: battery, 810: controller unit, 901: first waterline, 902: second waterline, 911: first center of gravity, 912: second center of gravity, DF: forward direction, DB: backward direction, DU: upward direction, DD: downward direction, DL: left direction, DR: right direction, DFB: forward-to-backward direction, DLR: left-right direction, CL: center axis

## Claims

1. An electric vehicle comprising:
a front wheel (21L);
an electric motor (500L) that is configured to drive the front wheel (21L);
a battery (800) that is configured to supply electrical power to the electric motor (500L);
a rear wheel (22L);
a metallic frame (10) that is configured to support the front wheel (21L) and the rear wheel (22L),
a vehicle-cabin forming portion (30) that includes a floor (31) having a floor surface of a vehicle cabin (110) and a peripheral wall (33) that is connected to a peripheral portion of the floor (31) so as to extend upwards from the floor (31) and to surround the floor (31) along the peripheral portion of the floor (31); and
outer plates (90),
wherein, the metallic frame (10) has a plurality of pillars (14L, 14R, 15L, 15R, 16L, 16R): left and right front pillars (14L, 14R), left and right center pillars (15L, 15R) and left and right rear pillars (16L, 16R); and a plurality of roof bars (17), and a plurality of front bars (18),
the plurality of roof bars (17) respectively connects upper ends of the pillars (14L, 14R, 15L, 15R, 16L, 16R),
the vehicle-cabin forming portion (30) is supported inside the metallic frame (10),
the outer plates (90) are supported by the plurality of pillars (14L, 14R, 15L, 15R, 16L, 16R) and the plurality of roof bars (17), and cover the vehicle cabin (110),
the peripheral wall (33) forms a subject aperture (120Lp) that is at least a lower-side portion of an aperture used for accesses of a passenger,
the electric vehicle further comprises a door member (81L) that is capable of closing/opening the subject aperture (120Lp), and
the vehicle-cabin forming portion (30) and the door member (81L) form a cup-shaped member (30, 81L) in the state in which the door member (81L) is closed, the cup-shaped member (30, 81L) being configured to be able to provide the electric vehicle with buoyancy sufficient to allow the electric vehicle to float on the water surface,
when the front wheel (21L), the electric motor (500L), the rear wheel (22L), and the battery (800) are projected in a direction parallel to a left-right direction of the electric vehicle:
the electric motor (500L) is arranged at a position at which at least a part of the electric motor (500L) overlaps with the front wheel (21L);
the battery (800) is arranged at a position at which at least a part of the battery (800) overlaps with the rear wheel (22L); and
a center of gravity (911, 912) of the electric vehicle is placed below a waterline (901, 902) in both a light load state and a full load state, and at the same time, a position of the center of gravity (911, 912) in a forward-to-backward direction of the electric vehicle is placed between the front wheel (21L) and the rear wheel (22L).

2. The electric vehicle according to claim 1, wherein
the vehicle-cabin forming portion (30) and the door member (81L) are formed of resin.

3. The electric vehicle according to claim 1 or 2, wherein
the front wheel (21L) includes: a tire (200L); a road wheel (300L) on which the tire (200L) is mounted; and a flow-channel forming portion (420L) that forms an opening (480L) facing a backward direction side and that forms a flow channel from a first side of the road wheel (300L) to the opening (480L),
the road wheel (300L) includes a propeller blade (304L), and
when the road wheel (300L) is rotated in water, the flow-channel forming portion (420L) discharges water from the opening (480L) towards the backward direction side, the water being sucked from a second side of the road wheel (300L) and discharged to the first side by the road wheel (300L).

4. The electric vehicle according to any one of claims 1 to 3, further comprising
a headlight (70L), wherein
at least a part of the headlight (70L) is arranged at a position higher than the waterline (902) that is associated with the full load state.

## Patentansprüche

1. Elektrisches Fahrzeug mit:
einem Vorderrad (21L);
einem elektrischen Motor (500L), der dazu eingerichtet ist, das Vorderrad (21L) anzutreiben;
einer Batterie (800), die dazu eingerichtet ist, dem elektrischen Motor (500L) elektrische Energie zuzuführen;
einem Hinterrad (22L);
einem Metallrahmen (10), der dazu eingerichtet ist, das Vorderrad (21L) und das Hinterrad (22L) zu tragen;
einem Fahrzeugkabineausbildungsabschnitt (30), der einen Boden (31) mit einer Bodenoberfläche der Fahrzeugkabine (110) und eine periphere Wand (33) aufweist, die mit einem peripheren Abschnitt des Bodens (31) verbunden ist, so dass sie sich von dem Boden (31) nach oben erstreckt und den Boden (31) entlang dem peripheren Abschnitt des Bodens (31) umgibt; und
äußere Platten (90),
wobei der Metallrahmen (10) eine Vielzahl von Säulen (14L, 14R, 15L, 15R, 16L, 16R): linke und rechte Vordersäulen (14L, 14R), linke und rechte Mittelsäulen (15L, 15R) und linke und rechte Hecksäulen (16L, 16R); und eine Vielzahl von Dachstangen (17) sowie eine Vielzahl von Vorderstangen (18) umfasst,
die Vielzahl der Dachstangen (17) jeweils obere Enden der Säulen (14L, 14R, 15L, 15R, 16L, 16R) verbindet,
der Fahrzeugkabinenausbildungsabschnitt (30) innerhalb des Metallrahmens (10) getragen wird,
die äußeren Platten (90) durch die Vielzahl von Säulen (14L, 14R, 15L, 15R, 16L, 16R) und die Vielzahl von Dachstangen (17) getragen werden, und die Fahrzeugkabine (110) bedecken,
die periphere Wand (33) eine Subjektöffnung (120Lp) ausbildet, die zumindest ein unterer Abschnitt einer Öffnung ist, die für den Zugang für einen Fahrgast benutzt werden kann,
das elektrische Fahrzeug ferner mit einem Türelement (81L) versehen ist, das die Subjektöffnung (120Lp) schließen/öffnen kann, und
der Fahrzeugkabinenausbildungsabschnitt (30) und das Türelement (81L) ein tassenförmiges Element (30, 81L) ausbilden, wenn das Türelement (81L) geschlossen ist, wobei das tassenförmige Element (30, 81L) dazu eingerichtet ist, dem elektrischen Fahrzeug genug Auftrieb bereitzustellen, so dass das elektrische Fahrzeug auf der Wassersoberfläche schwimmen kann,
und wenn das Vorderrad (21L), der elektrische Motor (500L), das Hinterrad (22L), und die Batterie (800) in einer Richtung parallel zu einer links-rechts-Richtung des elektrischen Fahrzeugs eingerichtet sind:
der elektrische Motor (500L) an einer Position angeordnet ist, an der zumindest ein Teil des elektrischen Motors (500L) mit dem Vorderrad (21L) überlappt,
die Batterie an einer Position angeordnet ist, an der zumindest ein Teil der Batterie (800) mit dem Hinterrad (22L) überlappt; und
ein Schwerpunkt (911, 912) des elektrischen Fahrzeugs sowohl in einem leicht beladenen Zustand als auch in einem voll beladenen Zustand unterhalb der Wasserlinie (901, 902) angeordnet ist, und gleichzeitig die Position des Schwerpunkts (911, 912) in der vorwärts-rückwärts-Richtung des elektrischen Fahrzeugs zwischen dem Vorderrad (21L) und dem Hinterrad (22L) angeordnet ist.

2. Elektrisches Fahrzeug nach Anspruch 1, wobei
der Fahrzeugkabinenausbildungsabschnitt (30) und das Türelement (81L) aus Harz ausgebildet sind.

3. Elektrisches Fahrzeug nach Anspruch 1 oder 2, wobei
das Vorderrad (21L) umfasst: einen Reifen (200L); ein Laufrad (300L), auf dem der Reifen (200L) angebracht ist; und einen Strömungskanalausbildungsabschnitt (420L), der eine einer Rückwärtsrichtung zugewandte Öffnung (480L) ausbildet, und der einen Strömungskanal von erster Seite des Laufrads (300L) zur Öffnung (480L) ausbildet,
das Laufrad (300L) einen Propellerflügel (304L) umfasst, und
wenn das Laufrad (300L) im Wasser gedreht wird, der Strömungskanalausbildungsabschnitt (420L) Wasser von der Öffnung (480L) zur Rückseite ausstößt, wobei das Wasser von einer zweiten Seite des Laufrades (300L) angesaugt und durch des Laufrad (300L) zu der ersten Seite ausgestoßen wird.

4. Elektrisches Fahrzeug nach einem der Ansprüche 1 bis 3, ferner mit
einem Frontscheinwerfer (70L), wobei
zumindest ein Teil des Frontscheinwerfers (70L) an einer Position oberhalb der Wasserlinie (902) bezogen auf den voll beladenen Zustand angeordnet ist.

## Revendications

1. Véhicule électrique comprenant :
une roue avant (21L) :
un moteur électrique (500L) qui est configuré pour entraîner la roue avant (21L) ;
une batterie (800) qui est configurée pour fournir l'énergie électrique au moteur électrique (500L) ;
une roue arrière (22L) ;
un bâti métallique (10) qui est configuré pour supporter la roue avant (21L) et la roue arrière (22L),
une partie formant cabine de véhicule (30) qui comprend un plancher (31) ayant une surface de plancher d'une cabine de véhicule (110) et une paroi périphérique (33) qui est raccordée à une partie périphérique du plancher (31) afin de s'étendre vers le haut à partir du plancher (31) et entourer le plancher (31) le long de la partie périphérique du plancher (31) ; et
des plaques externes (90),
dans lequel le bâti métallique (10) a une pluralité de piliers (14L, 14R, 15L, 15R, 16L, 16R) : des piliers avant gauche et droit (14L, 14R), des piliers centraux gauche et droit (15L, 15R) et des piliers arrière gauche et droit (16L, 16R) ; et une pluralité de barres de toit (17) et une pluralité de barres avant (18),
la pluralité de barres de toit (17) raccordent respectivement les extrémités supérieures des piliers (14L, 14R, 15L, 15R, 16L, 16R),
la partie formant cabine de véhicule (30) est supportée à l'intérieur du bâti métallique (10),
les plaques externes (90) sont supportées par la pluralité de piliers (14L, 14R, 15L, 15R, 16L, 16R) et la pluralité de barres de toit (17), et recouvrent la cabine de véhicule (110),
la paroi périphérique (33) forme une ouverture de sujet (120Lp) qui est au moins une partie du côté inférieur d'une ouverture utilisée pour l'accès d'un passager,
le véhicule électrique comprend en outre un élément de porte (81L) qui peut fermer / ouvrir l'ouverture de sujet (120Lp), et
la partie formant cabine de véhicule (30) et l'élément de porte (81L) forment un élément en forme de coupelle (30, 81L) dans l'état dans lequel l'élément de porte (81L) est fermé, l'élément en forme de coupelle (30, 81L) étant configuré pour pouvoir fournir le véhicule électrique avec la flottabilité suffisante pour permettre au véhicule électrique de flotter sur une surface d'eau,
lorsque la roue avant (21L), le moteur électrique (500L), la roue arrière (22L) et la batterie (800) font saillie dans une direction parallèle à la direction gauche - droite du véhicule électrique :
le moteur électrique (500L) est agencé dans une position à laquelle au moins une partie du moteur électrique (500L) recouvre la roue avant (21L) ;
la batterie (800) est agencée dans une position à laquelle au moins une partie de la batterie (800) recouvre la roue arrière (22L) ; et
un centre de gravité (911, 912) du véhicule électrique est placé au-dessous d'une ligne d'eau (901, 902) à la fois dans un état de charge légère ou un état de charge pleine, en même temps, une position du centre de gravité (911, 912) dans une direction avant - arrière du véhicule électrique est placée entre la roue avant (21L) et la roue arrière (22L).

2. Véhicule électrique selon la revendication 1, dans lequel :
la partie formant cabine de véhicule (30) et l'élément de porte (81L) sont formés à partir de résine.

3. Véhicule électrique selon la revendication 1 ou 2, dans lequel :
la roue avant (21L) comprend : un pneu (200L) ; une roue (300L) sur laquelle le pneu (200L) est monté ; et une partie formant canal d'écoulement (420L) qui forme une ouverture (480L) orientée du côté de la direction arrière et qui forme un canal d'écoulement à partir d'un premier côté de la roue (300L) par rapport à l'ouverture (480L),
la roue (300L) comprend une pale d'hélice (304L), et
lorsque la roue (300L) tourne dans l'eau, la partie formant canal d'écoulement (420L) décharge l'eau par l'ouverture (480L) vers le côté dans la direction vers l'arrière, l'eau étant aspirée depuis un second côté de la roue (300L) est déchargée par le premier côté par la roue (300L) .

4. Véhicule électrique selon l'une quelconque des revendications 1 à 3, comprenant en outre :
un phare (70L), dans lequel :
au moins une partie du phare (70L) est agencée dans une position plus haute que la ligne d'eau (902) qui est associée avec l'état de charge complète.
